(19) Europäisches Patentamt / European Patent Office / Office européen des brevets

(11) **EP 3 212 920 B1**

(12) **FASCICULE DE BREVET EUROPEEN**

(45) Date de publication et mention
de la délivrance du brevet:
**19.09.2018 Bulletin 2018/38**

(51) Int Cl.:
***F02M 25/08*** *(2006.01)*    ***F02D 41/22*** *(2006.01)*
***F02D 41/00*** *(2006.01)*    ***F02D 33/00*** *(2006.01)*

(21) Numéro de dépôt: **15791716.2**

(22) Date de dépôt: **23.10.2015**

(86) Numéro de dépôt international:
**PCT/FR2015/052858**

(87) Numéro de publication internationale:
**WO 2016/066937 (06.05.2016 Gazette 2016/18)**

(54) **PROCÉDÉ DE DIAGNOSTIC DU FONCTIONNEMENT DE LA PURGE D'UN CANISTER**

DIAGNOSE VERFAHREN DES ENTLÜFTUNGSBETRIEBS EINES AKTIVKOHLEFILTERS

DIAGNOSTIC METHOD OF THE VENTILATION OPERATION OF A CANISTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2014 FR 1460526**

(43) Date de publication de la demande:
**06.09.2017 Bulletin 2017/36**

(73) Titulaire: **Renault S.A.S.**
**92100 Boulogne-Billancourt (FR)**

(72) Inventeurs:
• **ISSARTEL, David**
**F-91580 Chauffour Les Etrechy (FR)**
• **HARTER, Cedric**
**F-91150 Etampes (FR)**

(56) Documents cités:
**EP-A2- 1 013 917**    **WO-A2-2013/053574**
**DE-A1-102009 002 746**    **FR-A3- 2 989 166**
**US-A- 5 592 923**    **US-A1- 2013 282 230**

**Description**

La présente invention concerne un procédé de diagnostic du fonctionnement de la vanne de purge d'un filtre à vapeurs de carburant d'un véhicule à moteur à combustion interne. L'invention concerne aussi le moteur mettant en oeuvre ce procédé.

Les normes antipollution imposent actuellement que les véhicules soient équipés de moyens permettant le diagnostic du fonctionnement de la purge du filtre à vapeurs de carburant.

Un tel filtre, appelé aussi « canister », est monté sur un véhicule comportant un moteur à combustion interne et un réservoir à carburant, tel que de l'essence, afin d'éviter que des vapeurs issues de ce réservoir soient rejetées dans l'atmosphère. Il est régulièrement purgé sur un trajet et de manière automatique. Cette purge se fait en établissant un circuit entre une entrée d'air dans une chambre de réserve du filtre et le collecteur d'admission du moteur, afin que les vapeurs soient brûlées dans les chambres de combustion au même titre que le carburant. Une vanne de purge est montée sur une conduite reliant le filtre au collecteur d'admission. Lors d'un fonctionnement normal, la vanne de purge, commandée par une unité de commande du moteur, s'ouvre progressivement au début de la purge, reste ouverte jusqu'à la fin de la purge, puis se referme également progressivement. L'ouverture est progressive afin que les paramètres de fonctionnement du moteur aient le temps de s'adapter face à cette arrivée supplémentaire de carburant et d'air.

Lorsque cette vanne de purge reste ouverte, ne se referme pas ou ne se referme que partiellement, on parle alors d'un dysfonctionnement.

Pour détecter de tels dysfonctionnements les méthodes de l'art antérieur, testent le fonctionnement de la vanne de purge lorsque le véhicule est dans un régime ralenti.

L'une des méthodes de diagnostic consiste à observer le fonctionnement du moteur lors de l'ouverture de la vanne de purge. A titre d'exemple, le document FR 2 900 982 A1 propose de réaliser une purge du canister lorsque le moteur tourne au ralenti, et d'observer le comportement d'un régulateur du régime de ralenti, basé par exemple sur un régulateur de type PID (Proportional Intégral Derivative). La comparaison de paramètres du régulateur avant la purge et après la purge, permet de diagnostiquer si l'ouverture de la vanne de purge a eu lieu ou non.

Cependant, sur des véhicules équipés de fonctions d'arrêt et démarrage (Start&Stop) automatique, de telles méthodes ne sont pas applicables. En effet, sur ce genre de véhicules, les phases de ralenti sont quasiment inexistantes. Il devient donc nécessaire de développer de nouvelles méthodes fonctionnant hors régime de ralenti.

Les documents FR 2989 166 A3, US 2013/282230 A1 et EP 1 013 917 A2 divulguent des procédés de test de la purge d'un canister applicables aux véhicules équipés de la fonction arrêt et demarrage. En particulier, les procédés divulgués dans les documents FR 2989 166 A3 et US 2013/282230 A1 sont basés sur la mesure de la pression du collecteur d'amission. Cependant, les etapes de mesures de ces procédés ne permettent pas d'obtenir des mesures précises.

Pour répondre à ce besoin la présente invention propose une méthode de diagnostic du fonctionnement de la vanne de purge d'un canister qui fonctionne à la fois en régime de ralenti et hors régime de ralenti.

L'invention concerne un procédé de diagnostic du fonctionnement de la vanne de purge d'un filtre à vapeurs de carburant d'un moteur à combustion interne, la vanne de purge établissant une communication fluidique sur commande entre une chambre de réserve du filtre et un collecteur d'admission du moteur, ledit procédé, réalisé au cours d'une purge est caractérisé en ce qu'il comprend les étapes suivantes :

    a) détection, à un instant t0, d'un certain taux d'ouverture de ladite vanne de purge, préalablement établi, à partir duquel on considère ladite vanne de purge suffisamment ouverte,

    b) exécution d'une fermeture forcée et instantanée de ladite vanne de purge, à un instant t2,

    c) mesure d'une première pression P1m du collecteur, régnant à l'intérieur du collecteur d'admission et calcul d'une première valeur modélisée P1c de ladite pression du collecteur en fonction du point de fonctionnement du moteur, à un instant t1 situé entre l'instant t0 l'instant t2,

    d) mesure d'une deuxième pression du collecteur P2m et calcul d'une seconde valeur modélisée P2c de ladite pression du collecteur en fonction du point de fonctionnement du moteur, à un instant t3 situé après l'instant t2,

    e) calcul d'un premier écart E1 entre la pression mesurée P1m et la pression calculée P1c et calcul d'un deuxième écart E2 entre la pression mesurée P2m et la pression calculée P2c

    f) calcul d'un critère C correspondant à la différence entre le premier écart E1 et le deuxième écart E2.

    g) diagnostic du dysfonctionnement de ladite vanne de purge si le critère C est inférieur à une valeur seuil Cs prédéterminée.

Ainsi, la mise en oeuvre du diagnostic du fonctionnement de la vanne de purge, selon l'invention, n'est pas limitée aux phases de ralenti et peut être réalisée à tout moment où une purge est lancée. En effet, comme le procédé se base sur la modélisation de la pression du collecteur, on peut mesurer à tout moment la pression régnant dans le collecteur d'admission et la comparer à une pression modélisée, obtenue au même moment, qui correspond théoriquement à la pression régnant dans le collecteur d'admission en dehors des phases de purge. La variation de la pression mesurée par rapport à la pression modélisée permet, ainsi, de renseigner sur l'ouverture et la fermeture de la vanne de purge.

Ce procédé est simple et ne nécessite pas de moyens spécifiques pour être mis en oeuvre, hormis un programme, par exemple sur l'unité de commande du moteur. Il suffit de détecter qu'une phase de purge est en cours, de mesurer la pression du collecteur et en même temps déterminer la valeur de la pression modélisée, puis ordonner une fermeture forcée et instantanée de ladite vanne de purge. Après cette fermeture il faut également mesurer la pression du collecteur et en même temps déterminer la valeur de la pression modélisée. La comparaison de l'écart entre la valeur de la pression mesurée et de la pression modélisée, avant et après la fermeture instantanée permet de détecter un éventuel dysfonctionnement. En effet, dans le cas d'un fonctionnement normal de cette vanne de purge, une chute brutale de la pression du collecteur devrait suivre cette fermeture instantanée. Ceci résulterait donc dans le fait que le critère calculé par la formule C= E1-E2 où E1=E1m-E1c et E2=E2m-E2c, sera élevé. Au contraire, dans le cas d'une vanne qui ne fonctionne pas correctement, c'est-à-dire bloquée dans une position d'ouverture ou de fermeture, ce critère sera faible car les valeurs de E1 et E2 seront proches.

La mise en oeuvre du procédé ne nécessite pas l'installation de moyens de mesure spécifiques, puisqu'un capteur permettant la mesure de la pression dans le collecteur d'admission est déjà disponible couramment sur les moteurs à combustion interne. La modélisation est réalisée sur les paramètres classiques tels que par exemple, à titre non limitatif, le régime du moteur, le degré d'ouverture d'une vanne papillon, la température du moteur, et la pression atmosphérique. Afin de distinguer une variation de pression due au débit de purge de celle causée par un changement de point de fonctionnement du moteur, le modèle ne prend pas en compte le débit de purge et donc ne varie qu'en fonction du point de fonctionnement du moteur.

De plus, le fait de calculer une différence entre les écarts E1 et E2, permet de pas prendre en compte un écart systématique entre la pression mesurée et la pression modélisée. En effet, l'écart systématique étant constant, en réalisant une différence entre les écarts, on annule l'effet de l'écart systématique.

Selon un mode de réalisation, le taux d'ouverture à partir duquel on considère la vanne de purge suffisamment ouverte est supérieur ou égal à 70% d'ouverture de ladite vanne de purge. Cette condition, permet de s'assurer de la fiabilité de la mesure. En effet, plus le taux d'ouverture de la vanne est grand, plus précis sera le critère C. Ceci s'explique par le fait que le flux d'air et de vapeurs de carburant arrivant au collecteur d'admission augmente avec l'augmentation du taux d'ouverture de la vanne de purge. Ainsi, l'écart entre la pression mesurée avant la fermeture instantanée et celle mesurée après cette fermeture instantanée est plus grand. La valeur de la pression modélisée est indépendante de ce taux d'ouverture, puisque le modèle ne varie qu'en fonction du point de fonctionnement du moteur.

De plus, afin de ne pas limiter le nombre de diagnostics réalisés au cours d'un trajet, il est conseillé que le taux d'ouverture à partir duquel on considère la vanne de purge suffisamment ouverte soit inférieur à 90% d'ouverture de ladite vanne de purge.

Selon un mode de réalisation préféré, l'écart entre l'instant t0 et l'instant t1 correspond à une durée de stabilisation de la pression du collecteur. Ainsi, dès que l'ouverture de la vanne de purge est détectée, à l'instant t0, une courte temporisation est lancée jusqu'à l'instant t1 pour permettre la stabilisation de la pression du collecteur, puis on mesure la pression réelle P1m et on calcul la pression modélisée correspondante P1c. Cette stabilisation permettra notamment obtenir une valeur plus précise de P1m.

Avantageusement, cette durée entre l'instant t0 et l'instant t1 est entre 1s et 3s.

Selon un mode de réalisation préféré l'écart entre l'instant t2 et l'instant t3 correspond à une durée de stabilisation de la pression du collecteur suite à la fermeture forcée et instantanée. Ainsi, dès que la fermeture forcée et instantanée est exécutée, à l'instant t2, une courte temporisation est lancée jusqu'à l'instant t3 pour permettre la stabilisation de la pression du collecteur, puis on mesure la pression réelle P2m et on calcule la pression modélisée correspondante P2c. Cette stabilisation permettra notamment obtenir une valeur plus précise de P2m.

Avantageusement, cette durée entre l'instant t2 et l'instant t3 est entre 0.5s et 2s.

Selon un mode de réalisation entre l'instant t0 et l'instant t1 on vérifie que la pression du collecteur est inférieure à une valeur maximale Pmax préalablement déterminée, par exemple 800 hPa. On vérifie également que le point de fonctionnement du moteur est stable, en s'assurant que la variation de pression du collecteur est inférieure à une valeur maximale préalablement déterminée, par exemple 20 hPa/s en valeur absolue.

Selon un autre mode de réalisation l'instant t2 et l'instant t3, on vérifie aussi que la pression du collecteur est inférieure à une valeur maximale Pmax préalablement déterminée et que le point de fonctionnement du moteur est stable. Si la variation de pression entre l'instant t2 et l'instant t3 dépasse un seuil préétabli, de l'ordre de 100 hPa, on arrête le diagnostic car celui-ci risque d'être faussé.

De façon préférentielle, l'instant t1 est égal à l'instant t2, la fermeture forcée et instantanée de la vanne de purge étant exécutée juste après l'enregistrement de la pression mesurée P1m et la pression calculée P1c.

Le fait de lancer la fermeture instantanée juste après la mesure de la pression P1m et calcul de la pression P1c permet de réduira le temps nécessaire à un diagnostic. De ce fait, le nombre de diagnostics possibles au cours d'une même purge augmente. Ceci s'explique par le fait que lors de la fermeture instantanée de la vanne de purge, si l'unité de commande du moteur la purge détecte que la durée de purge n'était pas suffisante, ladite vanne de purge se rouvrira automatiquement.

Selon un perfectionnement, les étapes *a)* à *g)* sont répétées au moins une fois et on conclut à un dysfonctionnement de la vanne de purge si le critère C est à chaque fois inférieur à la valeur seuil Cs. Ceci permet de donner une plus grande fiabilité au diagnostic et limite les risques de donner de fausses alertes. Par exemple, si la première mise en oeuvre du diagnostic détecte un dysfonctionnement, on relance les étapes a) à g) un nombre prédéterminé de fois, par exemple compris entre 2 et 4. Si, et seulement si, le résultat est le même à chaque fois que ces étapes sont répétées, on conclut au dysfonctionnement de la vanne de purge.

Selon un autre perfectionnement, la pression modélisée comporte une partie théorique et une partie corrective, cette partie corrective étant déterminée par apprentissage en fonction de l'écart entre la partie théorique et la pression mesurée en dehors des phases de purge. Cet apprentissage permet de prendre en compte des variabilités systématiques par rapport au modèle théorique du fonctionnement du moteur. Ces variabilités proviennent par exemple de dispersions d'usinage, d'un changement de capteur ou d'encrassement. La partie corrective est déterminée soit globalement, soit préférentiellement en fonction d'au moins certains paramètres caractérisant le point de fonctionnement du moteur.

L'invention a aussi pour objet un moteur à combustion interne comportant un collecteur d'admission, un filtre à vapeurs de carburant, une vanne de purge établissant une communication fluidique sur commande entre une chambre de réserve du filtre et du moteur, des moyens de mesure d'une pression de collecteur régnant à l'intérieur du collecteur d'admission, ledit moteur est caractérisé en ce qu'il met en oeuvre un procédé tel que décrit précédemment.

L'invention sera mieux comprise et d'autres particularités et avantages apparaîtront à la lecture de la description qui va suivre en référence aux dessins où :

- la figure 1 est une vue schématique d'un moteur thermique à combustion interne comportant un filtre à vapeurs de carburant mettant en oeuvre un procédé de diagnostic conforme à l'invention ;
- la figure 2 est un diagramme temporel montrant l'évolution de la pression du collecteur, mesurée et modélisée lors d'une purge avec fermeture forcée selon un mode de réalisation préféré du procédé.

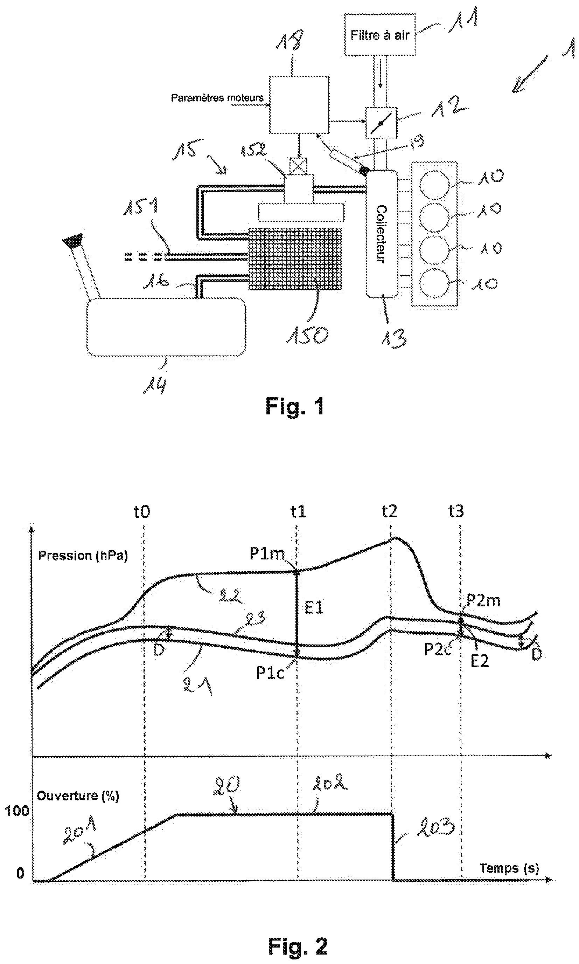

Le moteur 1 à combustion interne tel que représenté sur la figure 1 est du type à allumage commandé.

Il comporte une série de chambres de combustion 10 alimentées en mélange d'air et de carburant par l'intermédiaire d'un filtre à air 11, suivi d'une vanne papillon 12 et d'un collecteur d'admission 13. D'autres éléments fonctionnels du moteur 1 sont sans rapport avec l'invention et n'ont pas été représentés.

Le moteur 1 comporte en outre un réservoir 14 de carburant et un filtre à vapeurs 15 de carburant. Le filtre à vapeurs 15 de carburant comporte une chambre de réserve 150 qui est reliée par une première conduite 16 à la partie supérieure du réservoir 14. La chambre de réserve 150 est également reliée à une prise d'air 151 et au collecteur d'admission 13 par l'intermédiaire d'une deuxième conduite et d'une vanne de purge 152.

Le moteur 1 comporte une unité de commande 18 qui est par exemple une carte électronique à microprocesseur. Une telle unité de commande 18 est classique et n'est pas détaillée ici.

L'unité de commande 18 reçoit des informations de capteurs placés sur le moteur 1, avec en particulier un capteur de vitesse de rotation du vilebrequin du moteur, des capteurs de température, une sonde d'oxygène, non représentés, et un capteur de pression 19 pour mesurer la pression dans le collecteur d'admission 13.

L'unité de commande 18 pilote également la vanne de purge 152. Lorsqu'une purge est commandée et en dehors de la mise en oeuvre du procédé de diagnostic selon l'invention, la vanne de purge 152 s'ouvre progressivement jusqu'à son ouverture complète. Elle est maintenue ouverte pendant un certain temps puis est refermée, également progressivement. Lorsque la vanne est ouverte, un flux gazeux s'établit entre la prise d'air 151 et le collecteur d'admission 13, de telle sorte que les vapeurs de carburant contenues dans la chambre de réserve 150 sont entraînées vers le collecteur d'admission 13 et sont brûlées dans les chambres de combustion 10.

La figure 2 montre la position de la vanne de purge 152, en pourcentage d'ouverture, lors d'une mise en oeuvre du procédé selon l'invention au cours d'une phase de purge, par la courbe 20. L'évolution de la position de cette vanne de purge 152 comprend une phase d'ouverture progressive 201 jusqu'à l'ouverture totale, une phase de maintien en position d'ouverture 202 et une fermeture instantanée 203.

Pendant cette évolution de la position de la vanne de purge 152 l'unité de commande 18 détermine une pression modélisée, qui correspond théoriquement à la pression dans le collecteur d'admission 13 en dehors des phases de purge. La pression modélisée est représentée par la courbe 21 sur la figure 2. La pression modélisée comporte une partie théorique et une partie corrective, acquise par apprentissage en dehors des périodes de purge. Dans le même temps, le capteur de pression 19 mesure la pression dans le collecteur d'admission 13. Le résultat de cette mesure est indiqué par la courbe 22 de la figure 2.

Lorsque la vanne de purge 152 est bloquée, la pression mesurée dans le collecteur d'admission n'évolue pas de la même façon. La courbe 23 représente l'évolution de la pression mesurées lorsque la vanne de purge 152 est bloquée en position de fermeture. Dans ce cas la pression dans le collecteur d'admission 13 reste très proche de la pression modélisée. Un écart D peut exister entre la pression modélisée et la pression mesurée, mais cet écart est sensiblement constant.

Pour effectuer un diagnostic selon l'invention, l'unité de commande 18 détecte à un instant t0 que la vanne de purge est ouverte lorsque l'ouverture de celle-ci atteint un certain pourcentage d'ouverture à partir duquel l'ouverture est considérée comme suffisante. Ce pourcentage d'ouverture est de préférence entre 70% et 90% d'ouverture. Ceci permettra d'avoir à la fois une mesure précise de P1m et ne pas limiter le nombre de diagnostics possibles au cours d'une même purge.

Une première temporisation est ensuite lancée pour permettre la stabilisation de la pression dans le collecteur d'admission. La durée de cette temporisation est par exemple de 1s à 3s. A la fin de cette première temporisation, à l'instant t1, l'unité de commande 18 mémorise la valeur de la pression P1m mesurée dans le collecteur et la valeur calculée P1c de la pression modélisée selon le point de fonctionnement du moteur 1. Ces deux valeurs serviront ensuite à calculer un premier écart E1=P1m-P1c.

Par la suite, une fermeture forcée et instantanée de la vanne de purge 152 est exécutée à un instant t2 situé peu après l'instant t1, de sorte que l'unité de commande 18 a déjà mémorisé les valeurs de pression P1m et P1c pendant ce laps de temps. En variante non représentée, l'instant t2 pourrait aussi être le même que l'instant t1.

Une deuxième temporisation est lancée suite à cette fermeture instantanée de la vanne de purge à l'instant t2, pour permettre la stabilisation de la pression du collecteur. La durée de cette temporisation est par exemple comprise entre 0.5s et 2s. À la fin de cette temporisation, à l'instant t3, l'unité de commande 18 mémorise la valeur de la pression mesurée P2m dans le collecteur et la valeur calculée de la pression modélisée P2c selon le nouveau point de fonctionnement du moteur 1, puis calcule un deuxième écart E2=P2m-P2c. L'unité de commande 18 établit alors un critère C selon la formule :

$$C = E1 - E2$$

ensuite le critère C est comparé à un seuil Cs prédéterminé. Si le critère C est supérieur à Cs, alors la vanne a fonctionné correctement. Sinon, on répète une ou plusieurs fois le diagnostic. Si le résultat reste inchangé après un certain nombre de fois, par exemple compris entre 2 et 4, c'est-à-dire que si à chaque fois, le critère C est inférieur au seuil Cs, alors on conclut à un dysfonctionnement de la vanne de purge 152. Si au contraire, le critère C est au moins une fois supérieur au seuil Cs, on conclut qu'il n'y a pas de dysfonctionnement.

## Revendications

1. Procédé de diagnostic du fonctionnement de la vanne de purge (152) d'un filtre à vapeurs (15) de carburant d'un moteur (1) à combustion interne, la vanne de purge (152) établissant une communication fluidique sur commande entre une chambre de réserve (150) du filtre et un collecteur d'admission (13) du moteur (1), ledit procédé, réalisé en cours d'une purge comprend les étapes suivantes :

   a) détection, à un instant t0, d'un certain taux d'ouverture de ladite vanne de purge (152), préalablement établi, à partir duquel on considère ladite vanne de purge(152) suffisamment ouverte,
   b) exécution d'une fermeture forcée et instantanée de ladite vanne de purge (152), à un instant t2,
   c) mesure d'une première pression P1m du collecteur, régnant à l'intérieur du collecteur d'admission (13) et calcul d'une première valeur modélisée P1c de ladite pression du collecteur en fonction du point de fonctionnement du moteur (1), à un instant t1 situé entre l'instant t0 l'instant t2,
   d) mesure d'une deuxième pression du collecteur P2m et calcul d'une seconde valeur modélisée P2c de ladite pression du collecteur en fonction du point de fonctionnement du moteur (1), à un instant t3 situé après l'instant t2,
   e) calcul d'un premier écart (E1) entre la pression mesurée P1m et la pression calculée P1c et calcul d'un deuxième écart E2 entre la pression mesurée P2m et la pression calculée P2c
   f) Calcul d'un critère (C) correspondant à la différence entre le premier écart E1 et le deuxième écart E2.
   g) Diagnostic du dysfonctionnement de ladite vanne de purge (152) si le critère (C) est inférieur à une valeur seuil (Cs) prédéterminée.

2. Procédé de diagnostic selon la revendication 1, **caractérisé en ce que** le taux d'ouverture à partir duquel on considère la vanne de purge suffisamment ouverte est supérieur ou égal à 70% d'ouverture de ladite vanne de purge.

3. Procédé de diagnostic selon la revendication 1 ou 2, **caractérisé en ce que** le taux d'ouverture à partir duquel on considère la vanne de purge suffisamment ouverte est inférieur à 90% d'ouverture de ladite vanne de purge.

4. Procédé de diagnostic selon l'une des revendications 1 à 3, **caractérisé en ce que** l'écart entre l'instant t0 et l'instant t1 correspond à une durée de stabilisation de la pression du collecteur.

**5.** Procédé de diagnostic selon l'une revendications 1 à 4, **caractérisé en ce que** la durée entre l'instant t0 et l'instant t1 est comprise entre 1s et 3s.

**6.** Procédé de diagnostic selon la revendication 1 à 5, **caractérisé en ce que** l'écart entre l'instant t2 et l'instant t3 correspond à une durée de stabilisation de la pression du collecteur suite à la fermeture forcée et instantanée.

**7.** Procédé de diagnostic selon l'une des revendications précédentes, **caractérisé en ce que** la durée entre l'instant t2 et l'instant t3 est comprise entre 0.5s et 2s.

**8.** Procédé de diagnostic selon l'une des revendications précédentes, **caractérisé en ce qu'**entre l'instant t0 et l'instant t1 on vérifie que la pression du collecteur est inférieure à une valeur maximale Pmax préalablement déterminée et que le point de fonctionnement du moteur est stable.

**9.** Procédé de diagnostic selon l'une des revendications précédentes, **caractérisé en ce qu'**entre l'instant t2 et l'instant t3, on vérifie que la pression du collecteur est inférieure à une valeur maximale Pmax préalablement déterminée et que le point de fonctionnement du moteur est stable.

**10.** Procédé de diagnostic selon l'une des revendications précédentes **caractérisé en ce que** l'instant t1 est égal à l'instant t2, la fermeture forcée et instantanée de la vanne de purge (152) étant exécutée juste après l'enregistrement de la pression mesurée P1m et la pression calculée P1c.

**11.** Procédé de diagnostic selon l'une des revendications précédentes, **caractérisé en ce que** les étapes a) à f) sont répétées au moins une fois et on conclut à un dysfonctionnement de la vanne de purge (152) si le critère (C) est à chaque fois inférieur à la valeur seuil (Cs) .

**12.** Procédé de diagnostic selon l'une quelconque des revendications précédentes, **caractérisé en ce que** la pression modélisée comporte une partie théorique et une partie corrective, la partie corrective étant déterminée par apprentissage en fonction de l'écart entre la partie théorique et la pression mesurée en dehors des phases de purge.

**13.** Moteur à combustion interne comportant un collecteur d'admission (13), un filtre à vapeurs (15) de carburant, une vanne de purge (152) établissant une communication fluidique sur commande entre une chambre de réserve (150) du filtre et du moteur (1), des moyens de mesure d'une pression de collecteur régnant à l'intérieur du collecteur d'admission (13), ledit moteur est **caractérisé en ce qu'**il met en oeuvre un procédé selon l'une des revendications 1 à 12.

**Patentansprüche**

**1.** Verfahren zur Diagnose des Betriebs des Entlüftungsventils (152) eines Kraftstoffdampffilters (15) eines Verbrennungsmotors (1), wobei das Entlüftungsventil (152) auf Befehl eine fluidische Verbindung zwischen einer Vorratskammer (150) des Filters und einem Ansaugsammelrohr (13) des Motors (1) aufbaut, wobei das Verfahren, das während einer Entlüftung durchgeführt wird, die folgenden Schritte enthält:

a) Erfassen, zu einem Zeitpunkt t0, eines bestimmten vorab festgelegten Öffnungsgrads des Entlüftungsventils (152), ab dem angenommen wird, dass das Entlüftungsventil (152) ausreichend geöffnet ist,
b) Ausführen eines zwangsweisen und augenblicklichen Schließens des Entlüftungsventils (152) zu einem Zeitpunkt t2,
c) Messen eines ersten Drucks P1m des Sammelrohrs, der innerhalb des Ansaugsammelrohrs (13) herrscht, und Berechnung eines ersten modellisierten Werts P1c des Drucks des Sammelrohrs abhängig vom Betriebspunkt des Motors (1), zu einem Zeitpunkt t1, der sich zwischen dem Zeitpunkt t0 dem Zeitpunkt t2 befindet,
d) Messen eines zweiten Drucks des Sammelrohrs P2m und Berechnen eines zweiten modellisierten Werts P2c des Drucks des Sammelrohrs abhängig vom Betriebspunkt des Motors (1) zu einem Zeitpunkt t3 nach dem Zeitpunkt t2,
e) Berechnen einer ersten Abweichung (E1) zwischen dem gemessenen Druck P1m und dem berechneten Druck P1c und Berechnen einer zweiten Abweichung E2 zwischen dem gemessenen Druck P2m und dem berechneten Druck P2c,
f) Berechnen eines Kriteriums (C) entsprechend der Differenz zwischen der ersten Abweichung E1 und der zweiten Abweichung E2,
g) Diagnose des Ausfalls des Entlüftungsventils (152), wenn das Kriterium (C) niedriger als ein vorbestimmter Schwellwert (Cs) ist.

**2.** Diagnoseverfahren nach Anspruch 1, **dadurch gekennzeichnet, dass** der Öffnungsgrad, ab dem angenommen wird, dass das Entlüftungsventil ausreichend geöffnet ist, größer als oder gleich 70% Öffnung des Entlüftungsventils ist.

**3.** Diagnoseverfahren nach Anspruch 1 oder 2, **da-**

**durch gekennzeichnet, dass** der Öffnungsgrad, ab dem angenommen wird, dass das Entlüftungsventil ausreichend geöffnet ist, geringer als 90% Öffnung des Entlüftungsventils ist.

4. Diagnoseverfahren nach einem der Ansprüche 1 bis 3, **dadurch gekennzeichnet, dass** die Abweichung zwischen dem Zeitpunkt t0 und dem Zeitpunkt t1 einer Stabilisierungsdauer des Drucks des Sammelrohrs entspricht.

5. Diagnoseverfahren nach einem Ansprüche 1 bis 4, **dadurch gekennzeichnet, dass** die Dauer zwischen dem Zeitpunkt t0 und dem Zeitpunkt t1 zwischen 1s und 3s liegt.

6. Diagnoseverfahren nach Anspruch 1 bis 5, **dadurch gekennzeichnet, dass** die Abweichung zwischen dem Zeitpunkt t2 und dem Zeitpunkt t3 einer Stabilisierungsdauer des Drucks des Sammelrohrs nach dem zwangsweisen und augenblicklichen Schließen ist.

7. Diagnoseverfahren nach einem der vorhergehenden Ansprüche, **dadurch gekennzeichnet, dass** die Dauer zwischen dem Zeitpunkt t2 und dem Zeitpunkt t3 zwischen 0,5s und 2s liegt.

8. Diagnoseverfahren nach einem der vorhergehenden Ansprüche, **dadurch gekennzeichnet, dass** zwischen dem Zeitpunkt t0 und dem Zeitpunkt t1 überprüft wird, ob der Druck des Sammelrohrs niedriger als ein vorab festgelegter maximaler Wert Pmax ist, und dass der Betriebspunkt des Motors stabil ist.

9. Diagnoseverfahren nach einem der vorhergehenden Ansprüche, **dadurch gekennzeichnet, dass** zwischen dem Zeitpunkt t2 und dem Zeitpunkt t3 überprüft wird, ob der Druck des Sammelrohrs niedriger als ein vorab festgelegter Wert Pmax ist, und dass der Betriebspunkt des Motors stabil ist.

10. Diagnoseverfahren nach einem der vorhergehenden Ansprüche, **dadurch gekennzeichnet, dass** der Zeitpunkt t1 gleich dem Zeitpunkt t2 ist, wobei das zwangsweise und augenblickliche Schließen des Entlüftungsventils (152) direkt nach dem Speichern des gemessenen Drucks P1m und des berechneten Drucks P1c ausgeführt wird.

11. Diagnoseverfahren nach einem der vorhergehenden Ansprüche, **dadurch gekennzeichnet, dass** die Schritte a) bis f) mindestens einmal wiederholt werden, und dass auf einen Ausfall des Entlüftungsventils (152) geschlossen wird, wenn das Kriterium (C) jedes Mal unter dem Schwellwert (Cs) ist.

12. Diagnoseverfahren nach einem der vorhergehenden Ansprüche, **dadurch gekennzeichnet, dass** der modellisierte Druck einen theoretischen Teil und einen korrektiven Teil aufweist, wobei der korrektive Teil durch Lernen abhängig von der Abweichung zwischen dem theoretischen Teil und dem gemessenen Druck außerhalb der Entlüftungsphasen bestimmt wird.

13. Verbrennungsmotor, der ein Ansaugsammelrohr (13), einen Kraftstoffdampffilter (15), ein Entlüftungsventil (152), das auf Befehl eine fluidische Verbindung zwischen einer Vorratskammer (150) des Filters und des Motors (1) aufbaut, Einrichtungen zum Messen eines im Inneren des Ansaugsammelrohrs (13) herrschenden Sammelrohrdrucks aufweist, wobei der Motor **dadurch gekennzeichnet ist, dass** er ein Verfahren nach einem der Ansprüche 1 bis 12 durchführt.

**Claims**

1. Method for diagnosing the operation of the purge valve (152) for a fuel vapor filter (15) of an internal combustion engine (1), the purge valve (152) establishing a fluidic communication on request between a reserve chamber (150) of the filter and an intake manifold (13) of the engine (1), said method, carried out in the course of a purge, comprising the following steps:

    a) detecting, at an instant t0, a certain level of opening of said purge valve (152), established beforehand, on the basis of which said purge valve (152) is considered to be sufficiently open;
    b) executing a forced and instantaneous closing of said purge valve (152) at an instant t2;
    c) measuring a first pressure P1m of the manifold, prevailing in the interior of the intake manifold (13), and calculating a first modeled value P1c for said pressure of the manifold according to the operating point of the engine (1), at an instant t1 between the instant t0 the instant t2;
    d) measuring a second pressure of the manifold P2m and calculating a second modeled value P2c for said pressure of the manifold according to the operating point of the engine (1), at an instant t3 after the instant t2;
    e) calculating a first deviation (E1) between the measured pressure P1m and the calculated pressure P1c and calculating a second deviation E2 between the measured pressure P2m and the calculated pressure P2c;
    f) calculating a criterion (C) corresponding to the difference between the first deviation E1 and the second deviation E2;
    g) diagnosing the malfunction of said purge valve (152) if the criterion (C) is lower than a predetermined threshold value (Cs).

2.  Method for diagnosing according to Claim 1, **characterized in that** the level of opening from which the purge valve is considered to be sufficiently open is greater than or equal to 70% opening of said purge valve.

3.  Method for diagnosing according to Claim 1 or 2, **characterized in that** the level of opening from which the purge valve is considered to be sufficiently open is less than 90% opening of said purge valve.

4.  Method for diagnosing according to one of Claims 1 to 3, **characterized in that** the deviation between the instant t0 and the instant t1 corresponds to a stabilization time for the manifold pressure.

5.  Method for diagnosing according to one Claims 1 to 4, **characterized in that** the time between the instant t0 and the instant t1 lies between 1 s and 3 s.

6.  Method for diagnosing according to Claim 1 to 5, **characterized in that** the deviation between the instant t2 and the instant t3 corresponds to a stabilization time for the manifold pressure following the forced and instantaneous closing.

7.  Method for diagnosing according to one of the preceding claims, **characterized in that** the time between the instant t2 and the instant t3 lies between 0.5 s and 2 s.

8.  Method for diagnosing according to one of the preceding claims, **characterized in that**, between the instant t0 and the instant t1, it is verified that the manifold pressure is lower than a previously determined maximum value Pmax and that the operating point of the engine is stable.

9.  Method for diagnosing according to one of the preceding claims, **characterized in that**, between the instant t2 and the instant t3, it is verified that the manifold pressure is lower than a previously determined maximum value Pmax and that the operating point of the engine is stable.

10. Method for diagnosing according to one of the preceding claims, **characterized in that** the instant t1 is equal to the instant t2, the forced and instantaneous closing of the purge valve (152) being executed just after the recording of the measured pressure P1m and the calculated pressure P1c.

11. Method for diagnosing according to one of the preceding claims, **characterized in that** the steps a) to f) are repeated at least once, and a malfunction of the purge valve (152) is concluded to exist if the criterion (C) on each occasion is lower than the threshold value (Cs) .

12. Method for diagnosing according to any one of the preceding claims, **characterized in that** the modeled pressure includes a theoretical part and a corrective part, the corrective part being determined by a learning process according to the deviation between the theoretical part and the pressure measured outside the purge phases.

13. Internal combustion engine containing an intake manifold (13), a fuel vapor filter (15), a purge valve (152) establishing a fluidic communication on request between a reserve chamber (150) of the filter and of the engine (1), means of measuring a manifold pressure prevailing in the interior of the intake manifold (13), said engine being **characterized in that** it implements a method according to one of Claims 1 to 12.

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2900982 A1
- FR 2989166 A3
- US 2013282230 A1
- EP 1013917 A2